Europäisches Patentamt

European Patent Office

Office européen des brevets

(19)

(11) Publication number:    0 160 752

B1

## (12)  EUROPEAN PATENT SPECIFICATION

(45) Date of publication of patent specification: 27.07.88

(21) Application number: 84201862.4

(22) Date of filing: 04.10.82

(60) Publication number of the earlier application in accordance with Art. 76 EPC: 0 076 681

(51) Int. Cl.⁴: **B 23 K 1/12,** B 23 K 3/00, B 23 K 35/36, G 01 K 11/12, H 01 R 4/70

(54)  Soldering device and method.

(30) Priority: 05.10.81 US 308867

(43) Date of publication of application:
13.11.85 Bulletin 85/46

(45) Publication of the grant of the patent:
27.07.88 Bulletin 88/30

(84) Designated Contracting States:
AT BE CH DE FR IT LI NL SE

(56) References cited:
DE-A-2 809 461
US-A-3 396 894
US-A-3 451 609
US-A-4 228 761

(73) Proprietor: RAYCHEM CORPORATION
(a Delaware Corporation)
300 Constitution Drive
Menlo Park, California 94025 (US)

(72) Inventor: Cydzik, Edward Antoni
3601 Pasadena Drive
San Mateo California 94403 (US)
Inventor: Gen, Tamar G.
240 Monroe Drive
Mountain View California 94040 (US)

(74) Representative: Jay, Anthony William et al
Raychem Limited Intellectual Property Law
Department Faraday Road
Dorcan Swindon Wiltshire (GB)

Courier Press, Leamington Spa, England.

## Description

This invention relates to solder joints.

Heat-recoverable soldering devices are known in the art. See, for example, U.S. Patents Nos. 3,239,125 to Sherlock, 3,305,625 to Ellis, 3,316,343 to Sherlock, 3,396,460 to Wetmore and 3,396,894 to Ellis. Such heat-recoverable devices generally comprise a heat-shrinkable polymeric sleeve having a fusible insert comprising solder. Elongate substrates, such as a pair of wires, are inserted into the sleeve and heat is applied causing the sleeve to shrink into contact with the substrates. The heat also causes the solder to melt and flow around the substrates. Upon cooling, a solid solder joint is formed between the substrates. In general, the temperature required to melt the solder is higher than the temperature required to shrink the sleeve. Thus, visual observation that the sleeve has completely recovered does not necessarily mean that the temperature necessary for soldering has been reached. There is, therefore, no visible indication during the soldering process that enough heat has been applied. Further, in the event that a soldered joint so formed fails during use, there is no way of subsequently inspecting the joint to determine whether the failure was due to inadequate heating during the soldering process.

The present invention provides a solder joint comprising at least two elongate substrates connected together by a mass of solder having associated therewith a substantially colourless solder flux and a temperature indicating component that undergoes an irreversible colour change at the soldering temperature of the solder from a coloured state to a substantially colourless state, the joint being enclosed within a substantially transparent polymeric member and the temperature indicator being substantially colourless so as to indicate that it has been heated to the soldering temperature and to enable the connection to be visually inspected.

The polymeric member is substantially transparent to the extent that the visible colour change of the solder flux can be seen through the member. This device thus advantageously provides a clear visible indication that a solder joint or connection has reached the correct soldering temperature.

Prior to installation, the heat-recoverable member of the device is capable of undergoing a change in its dimensional configuration on application of heat. This change in dimensional configuration is usually toward an original shape from which it has previously been deformed, but the term "heat-recoverable", as used herein, also includes a member which, on heating, adopts a new configuration, even if it has not been previously deformed.

The heat-recoverable member of the device generally comprises a heat-shrinkable sleeve made from a polymeric material exhibiting the property of elastic or plastic memory as described, for example in, U.S. Patents Nos. 2,027,962 and 3,086,242. The original dimensionally heat-stable form may be a transient form in a continuous process in which, for example, an extruded tube is expanded, while hot, to a dimensionally heat-unstable form but, in other methods of preparation, a preformed dimensionally heat-stable article is deformed to a dimensionally heat-unstable form in a separate stage.

In the production of the heat-recoverable member, the polymeric material is generally cross-linked. One manner of producing a heat-recoverable article comprises shaping the polymeric material into the desired heat-stable form, subsequently cross-linking the polymeric material, heating the article to a temperature above the crystalline melting point, or for amorphous materials the softening point, of the polymer, deforming the article and cooling the article while in the deformed state so that the deformed state of the article is retained. In use, application of heat will cause the article to dimensionally recover from the deformed state to the original heat-stable shape.

In other articles, as described, for example, in U.S. Patent No. 4,207,364, an elastomeric member such as an outer tubular member is held in a stretched state by a second member, such as an inner tubular member, which, upon heating weakens and thus allows the elastomeric member to recover.

Examples of polymers used in the manufacture of heat-recoverable articles include polyolefins, e.g. polyethylene and copolymers of ethylene with ethylenically unsaturated monomers, such as ethylene/ethyl acrylate, ethylene/vinyl acetate copolymers, polyvinyl chloride, elastomers, silicones, polytetrafluoroethylene, polyvinylidene fluoride, polyurethanes, and ionomers. The polymer can be cross-linked either by radiation or chemical means.

The heat-recovery temperature of crystalline polymers is generally a temperature slightly above the crystalline melting temperature. Polymers, such as polyvinyl chloride, which are not crystalline recover at about their glass transition temperature.

The wall thickness of the member is preferably in the range of from about 0.0005 inch (0.0127 mm) to about 0.05 inch (1.2700 mm) and is especially preferably from about 0.0008 inch (0.0203 mm) to about 0.01 inch (0.2540 mm).

The solder insert may be positioned within the heat-recoverable member by coating solder onto the surface of the recoverable member. Alternatively, a solder preform of the desired configuration may be produced and this then inserted into the heat-recoverable member. The solder is positioned such that when two solderable substrates are positioned within the device and the device is heated, the solder is forced into intimate contact with the substrates by the recovery of the heat-recoverable member. When the heat-recoverable member is in the form of a heat-shrinkable sleeve, the solder is preferably in the shape of a ring on the inner surface of the sleeve.

The flux aids the flow of the solder or cleans the surfaces of the substrates to be joined or both. Various solder flux compositions are known and are commercially available. Widely used as solder fluxes are compositions based on natural rosin. Other fluxes include, for example, inorganic and organic acids. In use, the solder flux melts, flows and covers the substrate surface at a temperature below the melting point of the solder. Thus the particular flux used will depend of the nature of the solder in a given application. Any substantially colourless solder flux can be used in accordance with this invention. The flux comprises a temperature indicating component and the particular flux and the appropriate temperature indicating component to be used in a particular application can be readily ascertained by one skilled in the art without undue experimentation. The temperature indicating component is preferably one that is compatible with the flux and does not interfere with the normal functioning of the flux.

The solder flux is associated with the solder of the heat-recoverable soldering device. Any of the conventional means for associating flux with solder can be used. For example, a solder preform can be coated with flux by spraying, dipping, brushing or the like, usually before it has been positioned within the heat-recoverable device. The solder flux can also be used in soldering operations such as hand soldering, in which a heat-recoverable device is not employed. In this event, the flux can be coated on the solder or can be positioned within the solder, for example, in the form of a core which can be in various configurations as is well known in the art. The flux must be visible during the soldering process to detect the colour change in the flux when it reaches the appropriate temperature. It has been found that if the flux is positioned as a core within the solder, flow of the flux on heating renders it visible. A visible colour change occurs when the soldering temperature has been reached. In general, the soldering temperature is higher than the recovery temperature. Thus continued heating is required after recovery in order to effect the visible colour change of the solder flux.

In accordance with this invention, the solder flux composition contains a temperature indicator such that the flux undergoes a colour change when heated to the appropriate soldering temperature. The colour change is an irreversible colour change, that is a colour change that does not reverse, for example, when the solder and flux cool and solidify. Such an irreversible change provides a continuing indication and permanent means for determining whether the soldered joint was heated to the required temperature during soldering. Thus improperly formed terminations can be detected by visual inspection after the soldered connection is completed and cooled.

The colour change of the flux is from a coloured state to a substantially colourless one. The completed solder joint is thus visible for inspection through the flux. In this way, the joint itself can be inspected to check for adequate soldering and to detect improperly formed terminations, as well as to check for application of sufficient heat during the soldering process by the change in colour of the flux.

The flux composition changes colour at a critical temperature. The desired critical temperature varies depending on the particular solder used. The critical temperature is that temperature which is required to effect a solder connection with the particular solder, that is the temperature required to cause the solder to melt, flow and wet the substrates so that on cooling the solder makes a mechanical and electrical bond between the substrates being soldered. The particular solder to be used varies depending on the substrates being joined and the material of the heat-recoverable member. The temperature required to effect the solder termination is generally above the temperature required to cause recovery of the heat-recoverable member.

Since the critical temperature varies with the nature of the solder, the temperature indicating component of the flux composition varies depending on the solder used. Preferably, the flux composition undergoes a colour change in the temperature range of from about 150°C to about 450°C, especially preferably from about 200°C to about 240°C. The temperature of the colour change is preferably in the range of from about 20°C to about 60°C above the melting point of the solder. Preferably, it is about 20°C to about 30°C above the melting point of a low temperature solder and about 30°C to about 60°C above the melting point of a high temperature solder.

As stated above, the flux composition contains a temperature indicator such that at a critical temperature the flux composition undergoes a colour change. Various temperature indicators can be used, for example, azo dyes such as Pigment Red 73 (an azo dye prepared from 2-nitro-p-toluidine and 2-naphthol, CI 12120), acid-base indicators such as Thymol blue, diazo dyes such as Acid Red 73 (a diazo dye derived from p-phenylazoaniline and 2-naphthol-6,8-disulfonic acid, CI 27290), and the like. In general, any dye which is compatible with the flux and which undergoes a colour change at a critical temperature can be used.

Preferably the flux composition contains a temperature indicator that is a chemically reactive component which undergoes a chemical reaction with the solder flux at a critical temperature to produce a colour change. Particularly preferred are flux compositions in which, at a critical temperature, the reactive component causes the flux composition to become colourless since this allows the soldered joint to be readily inspected. Suitable chemically reactive components are, for example, Bromocresol Green, Basic Fuchsine or Thymol Blue.

The temperature indicator may be incorporated into a solder flux composition by known techniques. The amount of temperature indicator incorporated into the flux is preferably in the range of from about 0.01 to about 5 parts per 100 parts of flux and is especially preferably from about 0.05 to about 2 parts per 100 parts of flux. The amount added depends on the intensity of the colour. Sufficient temperature indicator should be added to provide a flux composition which is clearly visible during the soldering operation. The

**0 160 752**

flux composition may also contain additives, for example, dispersing aids such as water, alcohol or a subfactant or emulsifier, buffers, such as an acid or salt to maintain the desired pH, for example, oxalic acid, lactic acid, maleic acid, tartaric acid, fumaric acid or citric acid, and stabilizers.

An embodiment of a joint in accordance with the present invention will now be described by way of example, with reference to the accompanying drawings, wherein:

Figure 1 is a side view of a heat-recoverable device that is used to form a joint, the device having two elongate substrates positioned therein;

Figure 2 is a side view of the device of Figure 1 after a solder joint has been effected between the elongate substrates.

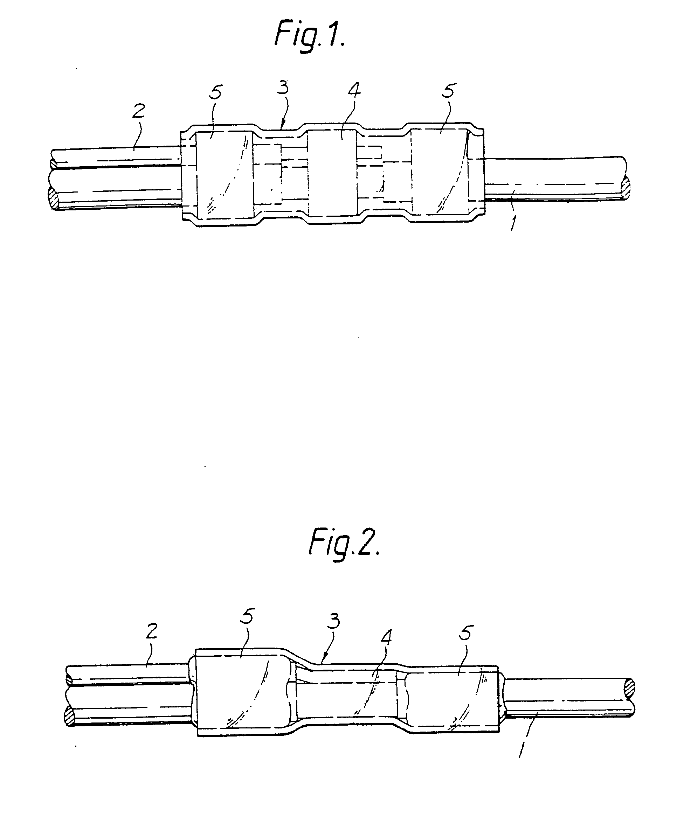

In Figure 1, a heat-recoverable device comprises a heat-recoverable member in the form of a tubular sleeve 3 having a solder insert 4. The sleeve 3 is a heat-shrinkable tube of radiation cross-linked ethylene-tetrafluoroethylene copolymer containing fusible thermoplastic inserts 5 toward each end of the tube. Prior to being positioned within the sleeve 3 the solder insert 4 is coated with a temperature indicating flux. The coated flux is dark blue in colour and thus obscures the grey colour of the solder insert.

The unrecovered sleeve 3 is positioned over a coaxial cable 1 having a portion of the outer insulation removed to expose the underlying shield. The end region of a ground wire 2 with the insulation being removed from the end region lies adjacent the exposed shield of the cable 1. The sleeve 3 is then heated causing it to shrink into contact with the cable and ground wire and to cause the solder to melt and flow. On heating, the flux changes colour at a temperature above the melting point of the solder becoming colourless. Heating is discontinued at this point. During heating of the sleeve, the thermoplastic inserts 5 melt and seal the sleeve to the cable. The resulting product is shown in Figure 2.

In Figure 2, sleeve 3 has shrunk into contact with and is sealed to the cable 1. As the flux is now colourless, the grey colour of the solder, 4, is visible through the sleeve. The solder has thus affected a termination between the shield of 1 and the exposed tip of ground wire, 2.

Devices suitable for forming the solder joint according to the present invention and methods of installation thereof are described in European Published Patent Application No. 0160752A.

The following Examples illustrate various solder flux compositions in accordance with the present invention.

<div align="center">Examples 1—10</div>

Temperature indicating solder flux compositions were prepared by dispersing various dyes in a Milros #611, a commercially available rosin-based flux comprising 37% of a mixture of rosin isomers in 63% isopropyl alcohol. The dyes used and the concentrations of dye in the resulting temperature indicating flux compositions are listed in Table 1. Additives, as listed in Table 1, were added as appropriate to aid in dissolution of the pigment or to buffer the solution to maintain the desired pH. The dyes used are:

Acid Red 73 (commercially available as Scarlet M Crude), a diazo dye derived from p-phenylazoaniline and 2-naphthol-6,8-disulphonic acid. (Colour Index, CI, 27290).

Thymol Blue, commercially available and also referred to as thymolsulphonphthalien.

Pigment Red 52 (commercially available as Garnet Toner #2), an azo dye derived from 2-amino-5-chloro-p-toluenesulphonic acid and 3-hydroxy-2-naphthoic acid. (CI 15860).

Bromocresol Green, also known as 3',3'',5',5''-tetrabromo-m-cresolsulphonphthalein.

Solvent Red 24, (commercially available as Atlasol Red 4B) an azo dye derived from 4-O-tolylazo-o-toluidine and 2-naphthol. (CI 26105).

Pigment Yellow 5 (also known as Lithol Fast Yellow Y) an azo dye derived from o-nitroaniline and acetoacetanilide (CI 11660).

Basic Violet 14, also known as Basic Fuchsine, and derived from aniline and toluidine. (CI 42510).

The flux composition was coated onto a solder preform which was then positioned within a heat-shrinkable sleeve made from cross-linked polyvinylidene fluoride. A solderable substrate, specifically an insulated wire with insulation removed from a segment, was inserted into the sleeve so that the uninsulated segment was positioned inside the sleeve. The sleeve was then heated causing the sleeve to shrink down onto the wire. The initial colour of the flux composition, the temperature at which the flux composition changed colour and the final colour of the flux are recorded in Table 1.

TABLE 1
Temperature Indicating Flux Compositions

| | Dye | | Additive | | | | |
|---|---|---|---|---|---|---|---|
| Example | Dye | Conc | Additive | Conc | Initial Colour | Final Colour | Temp of Colour Change |
| 1 | Acid Red 73 | 0.5% | Water | 10% | purple-maroon | colourless | 220°C |
| 2 | Thymol Blue | 1.0% | maleic acid | 3% | dark purple | colourless | 220°C |
| 3 | Thymol Blue | 0.5% | tartaric acid | 3% | dark purple | colourless | 220°C |
| 4 | Thymol Blue | 1.0% | citric acid | 6% | dark purple | colourless | 220°C |
| 5 | Pigment Red 52 | 1.5% | — | — | pink-purple | colourless | 220°C |
| 6 | Pigment Red 52 | 2.0% | — | — | pink-purple | colourless | 220°C |
| 7 | Pigment Red 52 | 3.0% | — | — | pink-purple | colourless | 220°C |
| 8 | Bromocresol Green | 1.0% | — | — | green | colourless | 250°C |
| 9 | Solvent Red 24 | 0.5% | — | — | red | colourless | 300°C |
| 10 | Basic Fuchsine | 0.5% | maleic acid | 3% | purple-red | colourless | 240—245°C |

# 0 160 752

## Claims

1. A solder joint comprising at least two elongate substrates connected together by a mass of solder (4) having associated therewith a substantially colourless solder flux and a temperature indicating component that undergoes an irreversible colour change at the soldering temperature of the solder from a coloured state to a substantially colourless state, the joint being enclosed within a substantially transparent polymeric member (3) and the temperature indicator being substantially colourless so as to indicate that it has been heated to the soldering temperature and to enable the connection to be visually inspected.

2. A solder joint as claimed in claim 1 wherein the heat-recovered polymeric member comprises a sleeve of cross-linked polymeric material.

3. A solder joint as claimed in claim 2 wherein each end region of the heat-recovered sleeve is sealed to the substrates by a thermoplastic insert.

4. A solder joint as claimed in claim 1, 2 or 3 wherein the polymeric member comprises an ethylene-tetrafluoro-ethylene copolymer.

5. A solder joint as claimed in claim 1, 2 or 3 wherein the polymeric member comprises polyvinylidene fluoride.

6. A solder joint as claimed in any one of the preceding claims wherein the solder flux comprises a rosin-based flux.

7. A solder joint as claimed in any one of the preceding claims wherein the temperature indicating component is compatible with the solder flux.

## Patentansprüche

1. Lötverbindung, die wenigstens zwei längliche Substrate aufweist, die miteinander durch eine Lötmasse (4) verbunden sind, der ein im wesentlichen farbloses Lötflußmittel und eine Temperaturanzeigekomponente zugeordnet sind, die einer irreversiblen Farbänderung bei der Löttemperatur des Lots, ausgehend von einem gefärbten Zustand zu einem im wesentlichen farblosen Zustand unterworfen ist, wobei die Verbindung in einem im wesentlichen transparenten polymeren Teil (3) eingeschlossen ist und die Temperaturanzeigeeinrichtung im wesentlichen farblos ist, um anzuzeigen, daß sie auf die Löttemperatur erwärmt worden ist, und um eine visuelle Inspizierung der Verbindung zu ermöglichen.

2. Lötverbindung nach Anspruch 1, bei der das in der Wärme rückstellbare Polymerteil eine Muffe aus vernetztem polymerem Material aufweist.

3. Lötverbindung nach Anspruch 2, bei der jeder Endbereich der wärmerückstellbaren Muffe durch einen thermoplastischen Einsatz mit den Substraten dicht schließend verbunden ist.

4. Lötverbindung nach Anspruch 1, 2 oder 3, bei der das polymere Teil ein Ethylentetrafluorethylencopolymer aufweist.

5. Lötverbindung nach Anspruch 1, 2 oder 3, bei der das polymere Teil Polyvinylidenfluorid aufweist.

6. Lötverbindung nach einem der vorangehenden Ansprüche, bei der das Lötflußmittel ein Flußmittel auf Kolophoniumbasis umfaßt.

7. Lötverbindung nach einem der vorangehenden Ansprüche, bei der die Temperaturanzeigekomponente mit dem Lötflußmittel kompatibel ist.

## Revendications

1. Joint de brasure comprenant au moins deux substrats allongés reliés entre eux par une masse de brasure (4) à laquelle est associé un flux de brasage pratiquement incolore et un constituant indiquant la température qui subit un changement de couleur irréversible à la température de brasage de la brasure d'un état coloré à un état pratiquement incolore, le joint étant enfermé dans un élément polymère (3) pratiquement transparent, et l'indicateur de température étant pratiquement incolore de manière à indiquer qu'il a été chauffé à la température de brasage et à permettre à la liaison d'être examinée visuellement.

2. Joint de brasure suivant la revendication 1, dans lequel l'élément polymère ayant récupéré thermiquement comprend un manchon de matière polymère réticulée.

3. Joint de brasure suivant la revendication 2, dans lequel chacune des régions d'extrémité du manchon ayant récupéré thermiquement est scellée aux substrats par un insert thermoplastique.

4. Joint de brasure suivant la revendication 1, 2 ou 3, dans lequel l'élément polymère comprend un copolymère éthylène-tétrafluoréthylène.

5. Joint de brasure suivant la revendication 1, 2 ou 3, dans lequel l'élément polymère comprend du fluorure de polyvinylidène.

6. Joint de brasure suivant l'une quelconque des revendications précédentes, dans lequel le flux de brasage comprend un flux à base de colophane.

7. Joint de brasure suivant l'une quelconque des revendications précédentes, dans lequel le constituant indiquant la température est compatible avec le flux de brasage.

6

0 160 752

## Fig.1.

## Fig.2.

1